# EUROPEAN PATENT APPLICATION

(11) **EP 3 040 283 A1**
(43) Date of publication of application: **06.07.2016**
(21) Application number: 15198751.8
(22) Date of filing: 09.12.2015
(51) Int. Cl.: B64F 5/00, H04L 29/08

(54) **NETWORK FOR DIGITAL EMULATION AND REPOSITORY**

(30) Priority: 29.12.2014 US 201414583840
(71) Applicant: GE Aviation Systems LLC, Grand Rapids, MI 49512-1991 (US)
(72) Inventor: VOSSIER, Gerald Les, Grand Rapids, MI 49512-1934 (US)
(74) Representative: Williams, Andrew Richard

(57) **Abstract**

A network (7) includes a processor (13), a memory location (11), a database (12) stored in the memory location (11), a fielded entity (1) in communication with the memory location (11) and a virtual replica (17) of the fielded entity (1). The database (12) includes historical data associated the fielded entity (1) and the processor (13) is configured to analyze the data.

## Description

### BACKGROUND

Increasingly, machinery, equipment and vehicles integrated with all manner of technology generate significant information during their lifecycles. For complex, high value assets, effective management of this information is important for design and development of the systems, proper maintenance of the assets and maximizing operational life. For example, contemporary aircraft may include a variety of avionics systems to assist in flying the aircraft. Such systems may generate and collect significant aircraft data and such data may indicate any irregularities or other signs of a fault or problem with the aircraft. Such data may be off-loaded from the aircraft and analyzed to determine what occurred on the aircraft. Currently, this data may be maintained in numerous places or may not be maintained at all, making it difficult or impossible to resolve issues or perform any type of optimization.

### BRIEF DESCRIPTION

In one aspect, an embodiment of the invention relates to a network. The network comprises a processor; a memory location; a database stored in the memory location; a fielded entity in communication with the memory location; and a virtual replica of the fielded entity. The database includes historical data associated the fielded entity and the processor is configured to analyze the data.

### BRIEF DESCRIPTION OF THE DRAWINGS

In the drawings:
Figure 1 is a diagrammatic representation of a network that includes gathering, storing and analyzing data from disparate fielded entities according to an embodiment of the invention.
Figure 2 is a diagrammatic representation of a network that includes communication with an aircraft according to an embodiment of the invention.

### DETAILED DESCRIPTION

In the background and the following description, for the purposes of explanation, numerous specific details are set forth in order to provide a thorough understanding of the technology described herein. It will be evident to one skilled in the art, however, that the exemplary embodiments may be practiced without these specific details. In other instances, structures and device are shown in diagram form in order to facilitate description of the exemplary embodiments.

The exemplary embodiments are described with reference to the drawings. These drawings illustrate certain details of specific embodiments that implement a network, module, method, or computer program product described herein. However, the drawings should not be construed as imposing any limitations that may be present in the drawings.

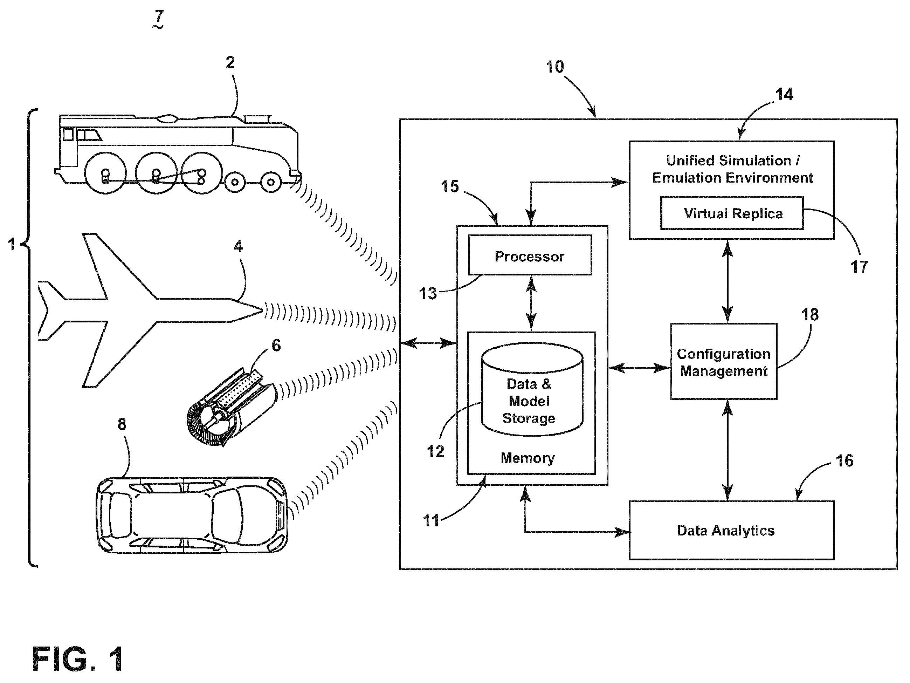

In accordance with an embodiment of the invention, FIG. 1 depicts a network 7 for gathering, storing and analyzing data from disparate fielded entities. As used herein, a "fielded entity" is any deployed system or device that generates information related to its state, performance or operation, and includes any element of the system or device contemplated during the concept, design, development and testing phases, i.e., the lifecycle before deployment for customer use. A fielded entity 1 may include a stand-alone system or device such as, by way of non-limiting example, a locomotive 2, an aircraft 4, an automobile 8, a cell phone (not shown), a manufacturing plant (not shown), a communications network (not shown), a toaster (not shown), a computer bus (not shown), a school bus (not shown), a generator (not shown), etc. A fielded entity 1 may include a device or sub-system integrated into a larger system or device such as, by way of non-limiting example, a turbine engine 6 on an aircraft, a line replaceable unit (LRU) (not shown) in an avionics system, etc. Information related to the fielded entity may include any observable and recordable data generated throughout the lifecycle of the fielded entity 1, where observable and recordable data includes the design and development models, software, hardware emulation, etc. as well as the data generated when by the design tools. That is, information related to the fielded entity 1 may include data generated at any phase of the fielded entity's lifecycle starting at the concept phase and continuing through the design, development, testing, verification, calibration, manufacturing, delivery, operation, repair and sunsetting phases. The information related to a fielded entity's implementation, state, performance or operation may result from data generated internal or external to the fielded entity 1. That is, the fielded entity 1 may include one or more sensing components that internally generate data related to the state, performance or operation of the fielded entity 1. Alternatively or additionally, one or more devices external to the fielded entity 1 may observe the state, performance or operation of the entity.

The network 7 includes one or more fielded entities such as a locomotive 2, an aircraft 4, a turbine engine 6, an automobile 8 in communication with a memory location 11. The memory location 11 is a component of a processing architecture 10 capable of gathering, storing and analyzing the data related to a fielded entity 1. The processing architecture 10 includes at least one processor 13 that may be implemented using an existing computer processor integrated into a computer 15, or by a special purpose computer processor incorporated for this or another purpose, or by a hardwired system, etc. The processing architecture 10 provides an interconnected set of modules that include a unified simulation and emulation environment 14 and a module for data analytics 16, each directed by a processor 13 and a module for configuration management 18.

As noted above, embodiments described herein may include a computer program product comprising machine-readable media for carrying or having machine-executable instructions or data structures stored thereon. Such machine-readable media can be any available media, which can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium that can be used to carry or store desired program code in the form of machine-executable instructions or data structures and that can be accessed by a general purpose or special purpose computer or other machine with a processor. When information is transferred or provided over a network or another communication connection (either hardwired, wireless, or a combination of hardwired or wireless) to a machine, the machine properly views the connection as a machine-readable medium. Thus, any such a connection is properly termed a machine-readable medium. Combinations of the above are also included within the scope of machine-readable media. Machine-executable instructions comprise, for example, instructions and data, which cause a general purpose computer, special purpose computer, or special purpose processing machines to perform a certain function or group of functions.

Embodiments will be described in the general context of functional steps that may be implemented in one embodiment by a program product including machine-executable instructions, such as program code, for example, in the form of program modules executed by machines in networked environments. Generally, program modules include routines, programs, objects, components, data structures, etc. that have the technical effect of performing particular tasks or implement particular abstract data types. Machine-executable instructions, associated data structures, and program modules represent examples of program code for executing steps of the method disclosed herein. The particular sequence of such executable instructions or associated data structures represent examples of corresponding acts for implementing the functions described in such steps.

Embodiments may be practiced in a networked environment using logical connections to one or more remote computers having processors. Logical connections may include a local area network (LAN) and a wide area network (WAN) that are presented here by way of example and not limitation. Such networking environments are commonplace in office-wide or enterprise-wide computer networks, intranets and the internet and may use a wide variety of different communication protocols. Those skilled in the art will appreciate that such network computing environments will typically encompass many types of computer system configuration, including personal computers, hand-held devices, multiprocessor systems, microprocessor-based or programmable consumer electronics, network PCs, minicomputers, mainframe computers, and the like.

Embodiments may also be practiced in distributed computing environments where tasks are performed by local and remote processing devices that are linked (either by hardwired links, wireless links, or by a combination of hardwired or wireless links) through a communication network. In a distributed computing environment, program modules may be located in both local and remote memory storage devices. In a cloud computing environment, large groups of remote servers are networked to allow centralized data storage such that online access to computer services or resources enable remote connectivity to one or more program modules for practicing embodiments. It is contemplated that the density of the data in some embodiments may necessitate aspects of the computing processes discussed herein to use a cloud-based implementation.

An exemplary system for implementing the overall or portions of the exemplary embodiments might include a general purpose computing device in the form of a computer 15, including a processor 13, a system memory location 11, and a system bus, that couples various system components including the system memory location 11 to the processor 13. The system memory location 11 may include read only memory (ROM) and random access memory (RAM). The computer may also include a magnetic hard disk drive for reading from and writing to a magnetic hard disk, a magnetic disk drive for reading from or writing to a removable magnetic disk, and an optical disk drive for reading from or writing to a removable optical disk such as a CD-ROM or other optical media. The drives and their associated machine-readable media provide nonvolatile storage of machine-executable instructions, data structures, program modules and other data for the computer.

The memory location 11 includes a data and model storage 12 to store all historical data such as design, test and operational data associated with the fielded entity 1 including, but not limited to software, simulation/emulation modules, mechanical models, structural data, etc. The historical data may include data related to the design and development of the fielded entity, the manufacture of the fielded entity 1, historical data associated with operational events of the fielded entity 1, real-time data associated with the operational events of the fielded entity 1, environmental data associated with operational events, etc. The data and model storage 12 may preferably include a relational, hierarchical database storing requirements, data, models and other information associated with a fielded entity 1. The database hierarchy is based on the systems, subsystems, parts, assemblies and software in the fielded entity 1. Data is associated with each element in the hierarchy during each phase of the fielded entity's lifecycle and may include requirements, behavioral models, structural analyses, test results, drawings, analytical results, test results, software, circuit diagrams, operational data, maintenance actions, etc.

As a part of the processing architecture 10, the network 7 includes a virtual replica 17 of the fielded entity 1. The virtual replica 17 of the fielded entity 1 incorporates the data stored in the data and model storage 12 to form a digital twin of the fielded entity 1. The digital twin paradigm is known in the art and well-described as "an integrated multiphysics, multiscale, probabilistic simulation of an as-built vehicle or system that uses the best available physical models, sensor updates, fleet history, etc., to mirror the life of its corresponding flying twin." (Glaessgen, Edward H., and David Stargel. AAIA 53rd Structures, Structural Dynamics, and Materials Conference, Honolulu, Hawaii. 2012.). As presented herein, the virtual replica 17 is not limited to a physics model but may include electronics, computers, programs, etc. related to the fielded entity 1. Additionally, the virtual replica 17 need not include a complete virtualization of the fielded entity 1; it may be applied to any part of a system in any phase of the lifecycle.

The virtual replica 17 forms an aspect of a larger unified simulation and emulation environment 14. The simulation and emulation environment 14 provides a virtual test bed to combine models associated with the virtual replica 17 along with models and data associated with an environment in which the fielded entity 1 operates. In this way, the simulation and emulation environment 14 provides a virtual environment to simulate the operation of the fielded entity 1 by its virtual replica 17. The simulation and emulation environment 14 associates models of the fielded entity 1 including models associated with sub-systems and devices that form aspects of the fielded entity 1. The simulation and emulation environment 14 may then simulate or emulate aspects or the entirety of the fielded entity 1. The simulation and emulation environment 14 may combine multiple simulations to represent the fielded entity 1 in operation. The processor 13 may store data created by the simulation and emulation environment 14 in the data and model storage 12 and associate simulation elements in the database hierarchy.

The module for data analytics 16 operates on the historical data stored in the data and model storage 12 and analyzes the models and environment simulations associated with the fielded entity 1 or elements of the fielded entity 1 to perform analysis (such as "what if" analysis or anomaly detection), optimization, and prediction operations. The module for data analytics 16 may include historical analysis that directly operates on the historical data in the data and model storage 12. The module for data analytics 16 may include predictive analysis that operates on data resulting from simulated operation scenarios performed in the unified simulation and emulation environment 14.

The module for configuration management 18 interacts with the simulation and emulation environment 14, the data and model storage 12 and the data analytics 16 to allow the fielded entity 1 to be analyzed and simulated (via the fielded entity's proxy of the virtual replica 17) at any point in its life cycle. In this way, the configuration management 18 establishes and maintains a timeline that describes the fielded entity at any point in its lifecycle. The module for configuration management 18 includes the information necessary to track the fielded entity's performance, functional and physical attributes along with requirements, design and operational information through its lifecycle. In this way, the module for configuration management 18 catalogs and tracks the data in the data and model storage 12 to maintain the associations and time history between the historical data, the simulated data, the models associated with the fielded entity 1 and the data analytics 16.

During a full lifecycle of a fielded entity 1, elements begin with a concept and follow through the lifecycle to post-operation (i.e. disposal). At any point in the development, elements may be instantiated and, per the configuration management 18, inherit the history of the previously defined element.

For example, during the development cycle of an aircraft 4, upon construction of a flight test aircraft, the network 7 defines a flight test aircraft instantiation that inherits all the information that will be used to design, develop and manufacture the flight test aircraft. The new instantiation's data model may include the part numbers and serial numbers of all the elements that are used to manufacture it. In a similar fashion, an avionics line replaceable unit (LRU) that is installed on the flight test aircraft will be included in the fielded entity's specific data model and may include information such as the part number/serial number (PN/SN) of the LRU, the PN/SN of the electronic assemblies, revision identifiers of software that executes in the LRU, etc. The LRU elements allow access to the source code, the binary file and an emulation environment for that LRU. During development, testing and operation phases, the data and model storage 12 stores operational and maintenance related data associated with the instantiation. Analysis of the data, accessed through the database's relationships, may occur based on a single instantiation, a group of instantiations or an entire fleet of instantiations. That is, the data analytics 16 may operate on data related to a single fielded entity 1 or a group of similar fielded entities.

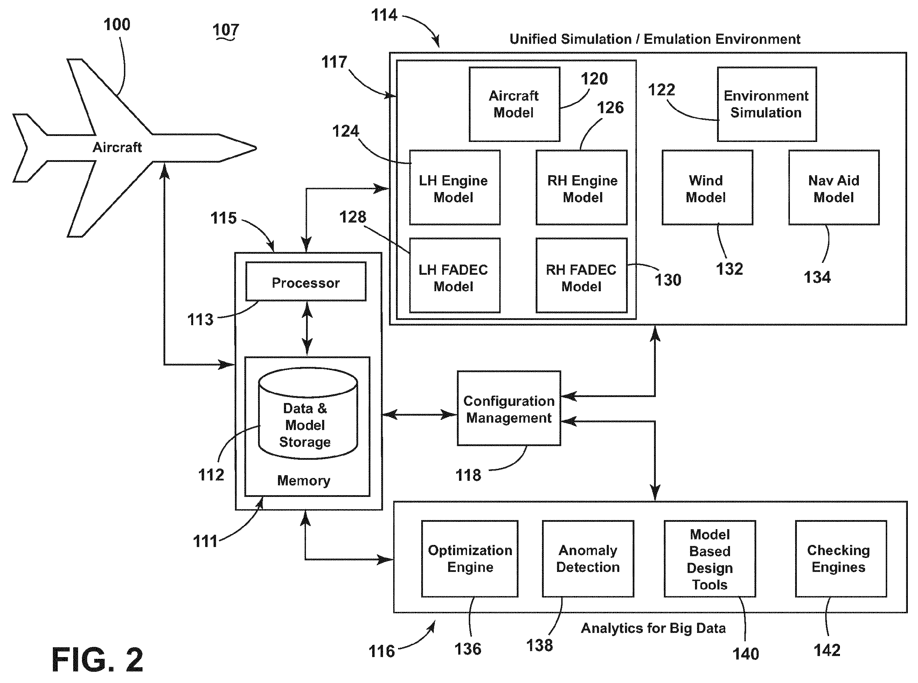

Referring now to FIG. 2 a diagrammatic representation of a network 107 includes communication with a fielded entity 100 that is an aircraft according to an embodiment. The embodiment is similar to the embodiment presented above; therefore, like parts will be identified with like numerals increased by 100, with it being understood that the description of the like parts of the previous embodiment applies to the current embodiment, unless otherwise noted. The fielded entity 100 is an aircraft and the information tracked in the configuration management 118, stored in the data and model storage 112, processed in the simulation and emulation environment 114 and the analytics 116 includes all aircraft design information, all aircraft test data, and all data collected during operation.

The unified simulation and emulation environment 114 includes modules specific to the aircraft 100. The virtual replica 117 includes an aircraft model 120 such as a six degrees of freedom (DOF) dynamic flight model that models the aerodynamic properties of the aircraft in flight. The virtual replica may include any number of additional models for describing the aircraft. For example, the virtual replica 117 may include one or more engine models such as the left hand engine model 124 and the right hand engine model 126. Each of these models may be coupled to a module to model the engine controller such as the left hand rotation full authority digital engine control (FADEC) model 128 and the right hand rotation FADEC model 130. The virtual replica 117 may include additional models for the aircraft for modeling aspects of the airframe and systems such as additional propulsion elements, life support, avionics, electrical power, thermal protection, structures etc.

The unified simulation and emulation environment 114 also includes modules specific to the environment in which the aircraft 100 operates or may operate. The environmental simulation 122 may include geo-referenced atmosphere, weather and terrain models. Weather models may include the Global Forecast System (GFS), the North American Mesoscale (NAM), Weather Research and Forecasting (WRF), etc. The unified simulation and emulation environment 114 may include a wind model 132 that may model wind patterns including any of the fast flowing air currents, collectively referred to as jet streams. The environmental simulation 122 may include models for navigational aids 134 and may model and integrate location data such as provided by Global Positioning System (GPS), VHF Omni-directional Radio Range (VOR), distance measuring equipment (DME), etc.

The unified simulation and emulation environment 114 may perform high-fidelity simulations that place the virtual replica 117 into virtual environments. The simulation may include a flight simulator such as X-plane where simulated missions may play out and the effects of a particular operation on the virtual replica 117 are observed and recorded. The weather, terrain and wind models may be combined in the simulation such that local effects influenced by factors external to the aircraft may be accurately modeled and applied in the overall simulation. The simulation may provide results at a near real-time pace. For example, the simulation may be configured to update based on the virtual replica 117 and the environmental models every 10 milliseconds, though other update rates may be implemented.

The simulations and the simulation execution environment provided by the simulation and emulation environment 114 may support troubleshooting issues, performance analyses and predictive events related to the fielded entity 100. That is, the module for data analytics 116 may include one or modules to analyze data generated by the simulations as well as the historical data related to the fielded entity 100.

The module for data analytics 116 may include an optimization engine 136. The optimization engine 136 includes processes for analyzing data related to the fielded entity 100 that may improve performance or guide best practices. The optimization engine 136 combs the store of data in the data and model storage 112 to find efficiencies in the operation of the fielded entity 100. For example, the optimization engine 136 may include logic to determine, based on analysis of historical and simulation data, optimal flight profiles to conserve fuel.

The module for data analytics 116 may include anomaly detection 138. Anomaly detection is the identification of events or observations that do not conform to the expected results of activities recorded in a dataset. In the case of an aircraft, the detected anomalies may indicate a fault that has occurred or will occur. In this way, predictive measures in the data analytics 116 may cue maintenance activities for the fielded entity 100.

The module for data analytics 116 may include model-based design tools 140 or other similar modules for data driven design. That is, the model-based design tools 40 may leverage historical data related to the fielded entity 100 with simulation results to assist in the design and development of the next generation of fielded entities. In this way, the data analytics 116 include the use of collected data to aid in the design of future products.

The data analytics 116 may provide additional insight both reactive and predictive regarding the fielded entity. For example, the data analytics 116 may check sub-systems of the fielded entity such as checking the engines 42. That is, the performance of the engines of an aircraft may be monitored by analysis of the historical data. In this way, the data analytics may predict attributes of the engines such as expected lifecycle or may be able to compare the engines to their virtual counterparts to improve on the models of the engines used in the virtual replica 117. As described above, the aggregation of a fielded entity and the instantiation of a virtual replica allows for combinations of disparate fielded entities to be analyzed and compared to determine which, if any are capable of completing specific missions. The analysis then identifies strategic options for mission planning and gap assessment. The network may automatically track virtual replicas, enabling unique tailoring of service and maintenance plans to optimize performance of a corresponding fielded entity. Consequently, a fleet of assets similarly tracked lower the cost of maintenance and operation and extend operational life. The collection of data associated with a fielded entity may enable the optimization of future designs of fielded entities with respect to the design, development and testing phases of a fielded entities lifecycle.

Beneficial effects of the above-described embodiments include the provision of models, data and a simulation environment that perform high-fidelity analyses at any point in the lifecycle of a fielded entity. Readily available high quality data, models and a simulation environments result in a better analysis of any issues, questions or predictions related to the fielded entity. That is, data analytics provided in the network described above provide analyses on a fleet of fielded entities to optimize design, behavior and usage across the entire fleet; analyses on a group of field entities that determine if a mission can be completed with the currently fielded assets or optimum mission planning parameters.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A network (7) comprising:
a processor (13);
a memory location (11);
a database (12) stored in the memory location (11);
a fielded entity (1) in communication with the memory location (11); and
a virtual replica (17) of the fielded entity (1);
wherein the database (12) includes historical data associated the fielded entity (17) and the processor (13) is configured to analyze the data.

2. The network (7) of claim 1, wherein the fielded entity is an automobile (8), a locomotive (2), an aircraft (4), an avionics line replaceable unit (LRU), a turbine engine (6), a communications bus or a generator.

3. The network (7) of either of claim 1 or 2, wherein the historical data relates to at least one of design/development of a fielded entity (1), manufacture of the fielded entity (1), operational events of the fielded entity (1), real-time data associated with the operational events of the fielded entity (1) or environmental data associated with operational events.

4. The network (107) of any of the preceding claims, wherein the data is analyzed and the analysis includes an optimization engine (136) that combs the data to find efficiencies in the operation of the fielded entity.

5. The network (107) of any of the preceding claims, wherein the data is analyzed and the analysis includes anomaly detection (138) to identify data in the database (112) that does not conform to an expected result and indicates the occurrence of a fault in the fielded entity.

6. The network (107) of any of the preceding claims, wherein the data is analyzed and the analysis includes data collection that combines the historical data and the analyzed data to assist in the design of future fielded entities.

7. The network (107) of any of the preceding claims, wherein the virtual replica (117) of the fielded entity is part of a simulation environment (114) that combines models associated with the virtual replica (117) along with models and data associated with an environment in which the fielded entity operates to provides a virtual environment (122) to simulate the operation of the fielded entity.

8. The network (107) of claim 7, further including configuration management (118) that interacts with the simulation environment (114) such that the virtual replica (117) simulates the fielded entity at any point in a lifecycle of the fielded entity.

9. The network (107) of any of the preceding claims, wherein the database (112) is relational and hierarchical and stores requirements, data and models associated with the fielded entity.

10. The network (107) of any of the preceding claims, wherein the virtual replica (117) includes at least one of operation software, simulation/emulation of hardware for line replaceable units including communications, surveillance, flight controls, navigation, guidance and flight deck controls and displays, or aero structure components including fuselage, wings and tail.

11. The network (107) of claim 10, wherein the virtual replica includes a six degrees of freedom dynamic flight model, at least one engine model and at least one engine controller model.

12. The network (107) of either of claim 10 or 11, wherein the processor is configured to analyze the data to determine an optimal flight profile to conserve fuel.
